# EUROPEAN PATENT APPLICATION

(11) **EP 4 779 747 A1**
(43) Date of publication of application: **22.07.2026**
(21) Application number: 25867246.8
(22) Date of filing: 17.10.2025
(51) Int. Cl.: H01M 10/0587

(54) **ELECTRODE ASSEMBLY, BATTERY CELL, BATTERY PACK AND VEHICLE COMPRISING SAME**

(30) Priority: 18.10.2024 KR 20240142687
(71) Applicant: LG ENERGY SOLUTION, LTD., Seoul 07335 (KR)
(72) Inventor: LEE, Hana, Daejeon 34122 (KR)
(74) Representative: Goddar, Heinz J.
(86) International application number: PCT/KR2025/016456
(87) International publication number: WO 2026/084506

(57) **Abstract**

An electrode assembly according to an embodiment of the present invention is a jelly-roll type electrode assembly having a structure in which a first electrode, a second electrode, and a separator interposed therebetween are wound in one direction, wherein the first electrode includes a first electrode in-tab and a first electrode outer tab attached to the first electrode and protruding in one direction parallel to a winding axis, and the first electrode in-tab and the first electrode outer tab each include a resin application portion in which a resin is applied to at least a partial region.

## Description

### [TECHNICAL FIELD]

The present invention relates to an electrode assembly, a battery cell, a battery pack, and a vehicle comprising the same.

### [BACKGROUND ART]

Secondary batteries, which have high applicability across various product groups and possess electrical characteristics such as high energy density, are widely applied not only to portable devices but also to electric vehicles (EVs) or hybrid electric vehicles (HEVs) driven by an electric drive source. These secondary batteries are drawing attention as a new energy source for enhancing eco-friendliness and energy efficiency because they not only have the primary advantage of being able to remarkably reduce the use of fossil fuels but also have the advantage that no by-products are generated from the use of energy.

Types of secondary batteries widely used today include lithium-ion batteries, lithium polymer batteries, nickel-cadmium batteries, nickel-metal hydride batteries, and nickel-zinc batteries. The operating voltage of a single secondary battery cell, i.e., a unit battery cell, is approximately 2.5 V to 4.5 V. Therefore, when a higher output voltage is required, the battery pack may be configured by electrically connecting a plurality of battery cells in series. In addition, depending on the charge/discharge capacity required for the battery pack, a plurality of battery cells may be connected in parallel to configure the battery pack. Accordingly, the number of battery cells included in the battery pack may be set in various ways depending on a required output voltage and/or charge and discharge capacity.

Meanwhile, in a conventional cylindrical battery cell, a secondary battery is configured by interposing a separator, which is an insulator, between a positive electrode and a negative electrode, winding the separator, the positive electrode, and the negative electrode to form a jelly-roll type electrode assembly, and inserting the electrode assembly together with an electrolyte into a battery can.

In the case of an electrode tab (based on the negative electrode) that supports and connects the jelly roll and the can, when the can is moved by receiving an impact such as a drop or vibration due to an external force, the electrode tab is bent very easily or exhibits deformation.

At this time, a twist shape has a problem in that an edge portion of the electrode tab penetrates the separator or comes into contact with the electrode, thereby internally causing a short circuit and an abnormal resistance due to factors such as weak welding.

### [SUMMARY OF THE INVENTION]

### [TECHNICAL PROBLEM]

Accordingly, an object of the present invention is to provide an electrode assembly, a battery cell, a battery pack, and a vehicle comprising the same, capable of improving deformation resistance by forming a resin application portion on a non-welded portion of an electrode tab attached to an electrode to increase the physical strength of the electrode tab.

However, technical problems to be solved by the present invention are not limited to the above-mentioned problems, and other problems not mentioned will be clearly understood by those skilled in the art from the description of the invention provided below.

### [TECHNICAL SOLUTION]

An electrode assembly according to an embodiment of the present invention for solving the above-described problems is a jelly-roll type electrode assembly having a structure in which a first electrode, a second electrode, and a separator interposed therebetween are wound in one direction, wherein the first electrode includes a first electrode in-tab and a first electrode outer tab attached to the first electrode and protruding in one direction parallel to a winding axis, and the first electrode in-tab and the first electrode outer tab are characterized by each including a resin application portion in which a resin is applied to at least a partial region.

Here, the first electrode in-tab is particularly characterized by being provided at an end located at a core portion among both ends in a direction perpendicular to the winding axis of the electrode assembly, and the first electrode outer tab is characterized by being provided at an end located at an outer portion among both ends in the direction perpendicular to the winding axis of the electrode assembly.

Here, the first electrode in-tab and the first electrode outer tab are particularly characterized by respectively including an inner portion attached to the first electrode and a protrusion portion protruding in a winding axis direction.

Here, the first electrode in-tab and the first electrode outer tab are particularly characterized by respectively including a welding portion welded and coupled to the first electrode at the inner portion, and the resin application portion is characterized by being provided in a region adjacent to the welding portion.

Here, the resin application portion is particularly characterized by being provided in plurality on each of the first electrode in-tab and the first electrode outer tab, and the resin application portion is characterized by being provided simultaneously on an upper resin application portion that is an upper portion of the welding portion and a lower resin application portion that is a lower portion of the welding portion.

Here, the resin application portion is particularly characterized in that an area of the upper resin application portion is provided to be larger than an area of the lower resin application portion.

Here, the resin application portion is particularly characterized in that at least one of a UV resin and a flexible resin is applied.

Here, the resin application portion is particularly characterized by being provided in a region excluding a region where the first electrode in-tab and the first electrode outer tab are bent.

The resin application portion is characterized by being provided in a region where the first electrode in-tab and the first electrode outer tab do not protrude from the electrode assembly.

Here, the first electrode is particularly characterized by being a negative electrode.

Meanwhile, the present invention provides a battery cell comprising: the electrode assembly according to the above-described embodiment; a battery can accommodating the electrode assembly and electrically connected to the first electrode; a sealing body sealing an open end of the battery can; and a terminal electrically connected to the second electrode and having a surface exposed to the outside.

Meanwhile, the present invention provides a battery pack comprising at least one battery cell according to the above-described embodiment.

In addition, the present invention provides a vehicle comprising at least one battery pack according to the above-described embodiment.

### [ADVANTAGEOUS EFFECTS OF THE INVENTION]

According to the present invention, an internal short circuit caused by bending and deformation of the electrode tab can be prevented.

In addition, according to the present invention, deformation resistance of the tab can be improved by increasing the physical strength of the welding portion of the electrode tab.

However, effects obtainable through the present invention are not limited to the above-described effects, and other unmentioned technical effects will be clearly understood by those skilled in the art from the following description of the invention.

### [BRIEF DESCRIPTION OF DRAWINGS]

The following drawings attached to the present specification illustrate preferred embodiments of the present invention and serve to further properly understand the technical spirit of the present invention together with the detailed description of the invention to be described later, and thus the present invention should not be construed as being limited only to the matters described in such drawings.
FIG. 1 is a view illustrating a battery cell according to an embodiment of the present invention.
FIG. 2 is a view illustrating an internal structure of a battery cell according to an embodiment of the present invention.
FIG. 3 is a view for explaining formation of an electrode assembly according to an embodiment of the present invention included in the battery cell of FIG. 1.
FIG. 4 is a view illustrating a configuration including an electrode tab of an electrode assembly according to an embodiment of the present invention included in the battery cell of FIG. 1.
FIG. 5 is a view illustrating a structure in which an inner tab and an outer tab are located at both ends of an electrode before winding of the electrode assembly of FIG. 4.
FIG. 6 is an enlarged view of a portion of the inner tab and the outer tab of the electrode of FIG. 4.
FIG. 7 is a view schematically illustrating a configuration of a battery pack according to an embodiment of the present invention.
FIG. 8 is a view schematically illustrating a vehicle comprising the battery pack of FIG. 7.
FIG. 9 is a view illustrating an example in which deformation occurs at a core portion and an outer side of an electrode assembly.

### [MODES FOR CARRYING OUT THE INVENTION]

Hereinafter, preferred embodiments of the present invention will be described in detail with reference to the accompanying drawings. Prior to this, terms or words used in this specification and claims should not be construed as being limited to their ordinary or dictionary meanings, but should be construed as meanings and concepts consistent with the technical spirit of the present invention based on the principle that the inventor can appropriately define the concepts of terms to explain his or her invention in the best way. Therefore, the embodiments described in this specification and the configurations shown in the drawings are merely some of the most preferred embodiments of the present invention and do not represent all of the technical spirit of the present invention, so it should be understood that there may be various equivalents and modifications that can substitute them at the time of the present application.

In addition, in order to help understanding of the invention, the accompanying drawings are not drawn to actual scale, but dimensions of some components may be exaggerated. In addition, the same reference numerals may be assigned to the same components in different embodiments.

A statement that two subjects being compared are the same means that they are 'substantially identical.' Accordingly, 'substantial identity' may encompass variations within a tolerance deemed acceptable by one of ordinary skill in the art, for instance, a deviation of 5% or less. In addition, that a parameter is uniform in a predetermined region may mean that it is uniform from an average viewpoint.

Although terms such as first, second, and the like are used to describe various components, it goes without saying that these components are not limited by these terms. These terms are only used to distinguish one component from another component, and unless specifically stated otherwise, it goes without saying that a first component may be a second component.

Throughout this specification, unless the context dictates otherwise, each component may be singular or plural.

The placement of a component 'on (or below)' or 'above (or beneath)' another component is to be understood as encompassing not only the case where the component is in direct contact with the upper (or lower) surface of the other component, but also the case where another component may be interposed therebetween.

Furthermore, when a component is described as being 'connected,' 'coupled,' or 'joined' to another component, it is to be understood that the components may be directly connected, coupled, or joined to each other, or may be connected, coupled, or joined via another component, with another component being interposed therebetween.

Throughout the specification, "A and/or B" shall mean A, B, or both A and B, and "C to D" shall mean a range from C to D inclusive, unless otherwise stated.

In the present specification, a "core portion" is provided at an innermost side of an electrode assembly, and means an empty space provided by winding a jelly-roll type electrode assembly using a core.

In the present specification, an "in-tab" means a tab provided at an end located at the core portion among both ends in a direction perpendicular to a winding axis of the electrode assembly.

For convenience of description, in the present specification, a direction along a longitudinal direction of a winding axis of the electrode assembly 10 wound in a jelly-roll shape is referred to as an axial direction. And a direction surrounding the winding axis is referred to as a circumferential direction or a peripheral direction. And a direction approaching the winding axis or moving away from the winding axis is referred to as a radial direction. Among these, in particular, a direction approaching the winding axis is referred to as a centripetal direction, and a direction moving away from the winding axis is referred to as a centrifugal direction.

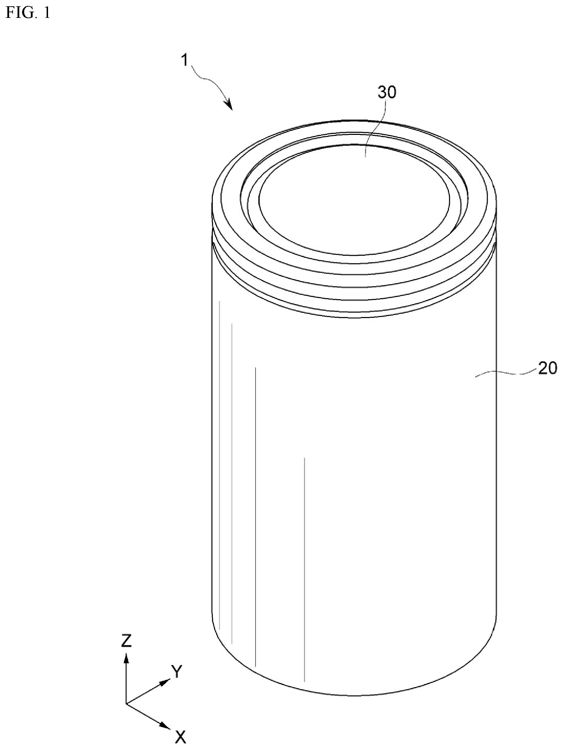

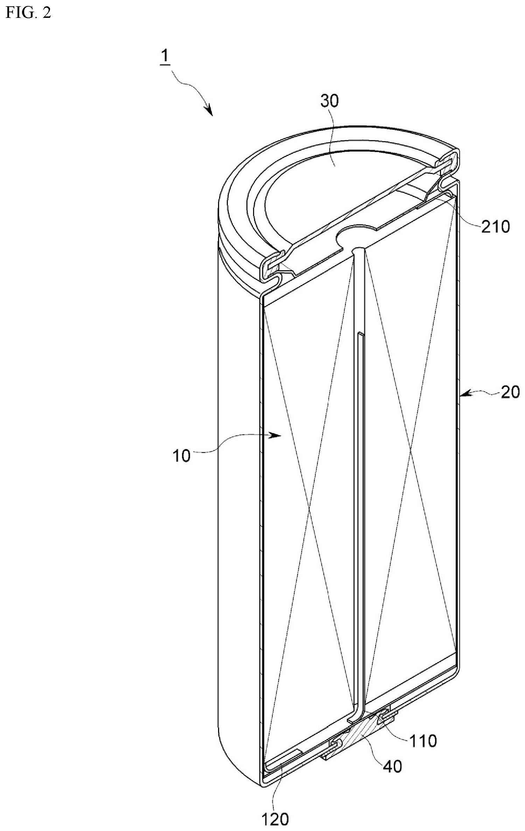

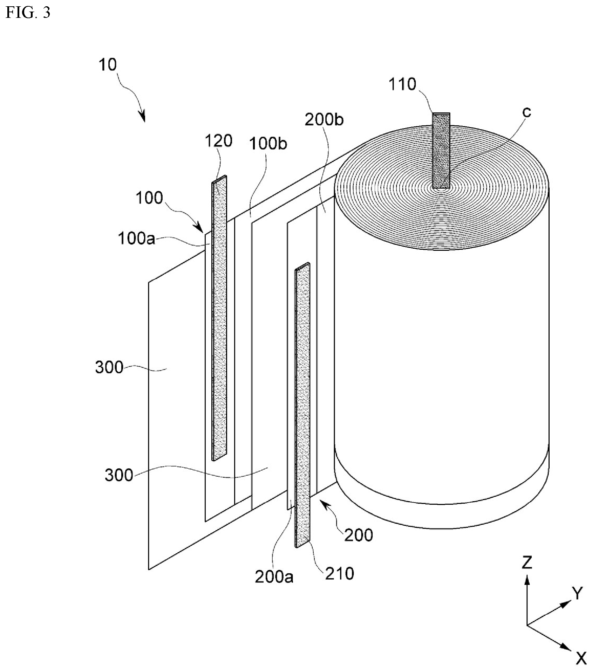

FIG. 1 is a view illustrating a battery cell according to an embodiment of the present invention, FIG. 2 is a view illustrating an internal structure of the battery cell according to an embodiment of the present invention, and FIG. 3 is a view illustrating an electrode assembly according to an embodiment of the present invention included in the battery cell of FIG. 1.

Referring to FIGS. 1 to 3, the battery cell 1 according to an embodiment of the present invention includes the electrode assembly 10, a battery can 20, a sealing body 30, and a terminal 40.

Referring to FIGS. 1 to 3, the electrode assembly 10 includes a first electrode 100 having a negative electrode, a second electrode 200 having a positive electrode, a separator 300 interposed between the first electrode 100 and the second electrode 200, and an insulating layer covering at least a portion of the first electrode 100.

The first electrode 100 corresponds to a negative electrode or a positive electrode, and the second electrode 200 corresponds to an electrode having a polarity opposite to that of the first electrode 100. The first electrode 100 and the second electrode 200 may have a sheet shape. The electrode assembly 10 may have, for example, a jelly-roll shape. That is, the electrode assembly 10 may be manufactured by sequentially stacking the first electrode 100, the separator 300, the second electrode 200, and the separator 300 at least once to form a laminate, and winding the laminate based on a winding center C. In this case, an additional separator 300 may be provided on an outer peripheral surface of the electrode assembly 10 for insulation from the battery can 20.

The first electrode 100 may include a first uncoated portion 100a on which an active material layer is not coated at both ends in a direction perpendicular to the winding axis. The first electrode 100 may include a first coated portion 100b in which an active material layer is coated in a region excluding the first uncoated portion 100a. Specifically, the first electrode 100 includes a first electrode current collector and a first electrode active material applied on one surface or both surfaces of the first electrode current collector. A region where the first electrode active material is applied on the first electrode current collector is referred to as the first coated portion 100b provided in the first electrode 100. The first uncoated portion 100a on which the first electrode active material is not applied may be present at both end portions of the first electrode 100 in a roll direction (a direction parallel to a Z-axis). At this time, a first electrode in-tab 110 and a first electrode outer tab 120 may be provided at the first uncoated portions 100a at both ends. That is, the first electrode in-tab 110 is provided at the first uncoated portion 100a at one end of the first electrode 100, and the first electrode outer tab 120 is provided at the first uncoated portion 100a at the other end.

The second electrode 200 may include a second uncoated portion 200a on which an active material layer is not coated at one end in a direction perpendicular to the winding axis. The second electrode 200 may include a second coated portion 200b in which an active material layer is coated in a region excluding the second uncoated portion 200a. The second electrode 200 includes a second electrode current collector and a second electrode active material applied on one surface or both surfaces of the second electrode current collector. A region where the second electrode active material is applied on the second electrode current collector is referred to as the second coated portion 200b provided in the second electrode 200. The second uncoated portion 200a on which the second electrode active material is not applied may exist at one end of the second electrode current collector in the roll direction (the direction parallel to the Z-axis). An electrode tab 210 provided in the second electrode 200 may be provided at the second uncoated portion 200a. Meanwhile, hereinafter, for convenience of description, the first uncoated portion 100a and the second uncoated portion 200a may be collectively referred to as uncoated portions 100a and 200a. Similarly, the first coated portion 100b and the second coated portion 200b may be collectively referred to as coated portions 100b and 200b.

Electrode tabs protruding in opposite directions to each other may be formed at the first uncoated portion 100a provided at the first electrode 100 and the second uncoated portion 200a provided at the second electrode 200. For example, referring to FIG. 3, the first electrode in-tab 110 and the first electrode outer tab 120 may protrude toward an upper portion in a height direction (a direction parallel to the Z-axis) of the electrode assembly 10 at the first uncoated portion 100a provided at the first electrode 100, and in this case, a second electrode tab 210 may protrude toward a lower portion in a direction parallel to the winding axis of the electrode assembly 10 (the direction parallel to the Z-axis) at the second uncoated portion 200a provided at the second electrode 200. Accordingly, the first uncoated portion 100a provided at the first electrode 100 and the second uncoated portion 200a provided at the second electrode 200 form electrode tabs protruding in opposite directions to each other along a width direction of the electrode assembly 10, that is, the height direction of the battery cell 1 (the direction parallel to the Z-axis).

Meanwhile, although FIG. 3 illustrates a structure in which the first electrode in-tab 110 and the first electrode outer tab 120 protrude in an upward direction, when inserted into a cylindrical battery can, the tabs may be positioned in an opposite direction as shown in FIG. 2 to be connected to respective electrical terminals.

Meanwhile, in the present invention, a positive electrode active material coated on a positive electrode plate and a negative electrode active material coated on a negative electrode plate may be used without limitation as long as the materials are active materials known in the art.

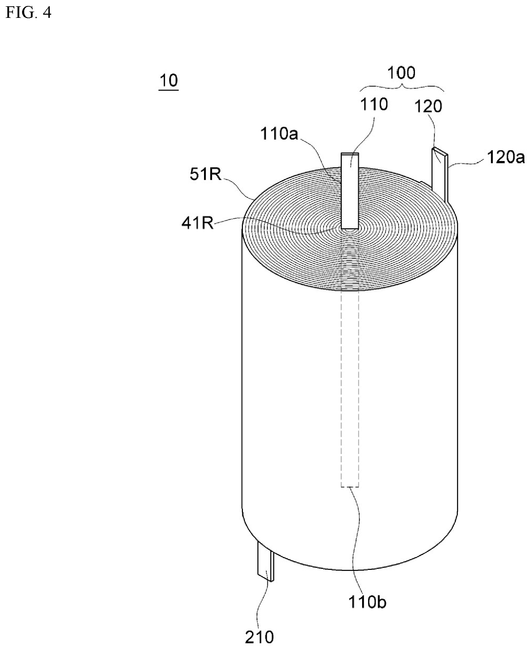

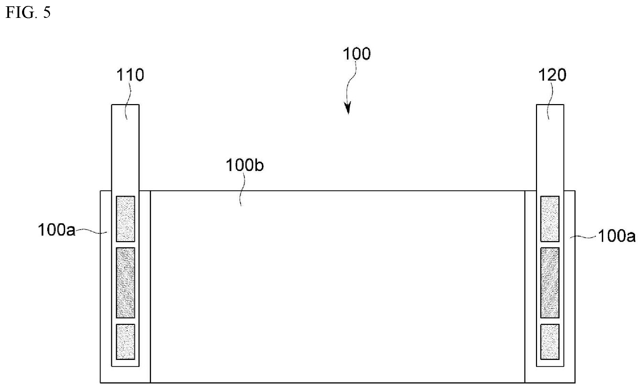

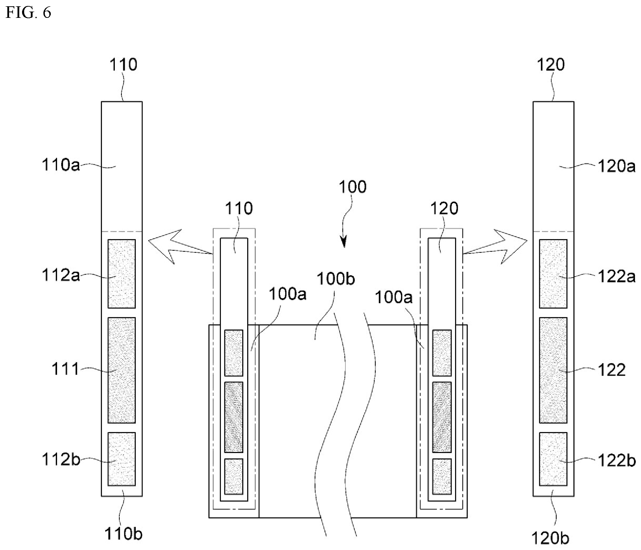

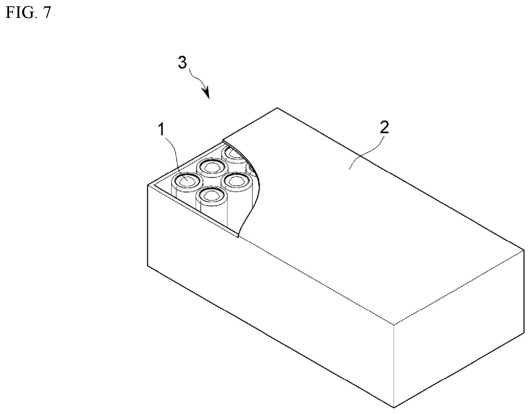

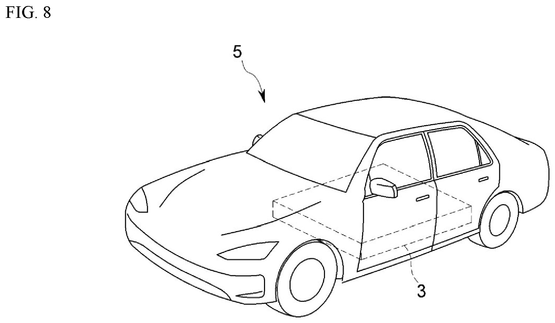

FIG. 4 is a view illustrating a configuration including an electrode tab of the electrode assembly according to an embodiment of the present invention included in the battery cell of FIG. 1, FIG. 5 is a view illustrating a structure in which an in-tab and an outer tab are located at both ends of an electrode before winding of the electrode assembly of FIG. 4, FIG. 6 is an enlarged view of a portion of the in-tab and the outer tab of the electrode of FIG. 4, FIG. 7 is a view illustrating a battery pack according to an embodiment of the present invention, FIG. 8 is a view illustrating a vehicle according to an embodiment of the present invention, and FIG. 9 is a view illustrating an example in which deformation occurs at a core portion and an outer side of the electrode assembly.

As shown in FIG. 4, the electrode assembly 10 includes the first electrode in-tab 110 provided at the first electrode 100 at an end located at the core portion among both ends in a direction perpendicular to the winding axis of the electrode assembly 10. The first electrode in-tab 110 may be attached to the first electrode 100 and protrude in one direction parallel to the winding axis. For example, the first electrode in-tab 110 may protrude upward. The first electrode in-tab 110 can maintain rigidity and prevent an expansion stress inside the electrode assembly 10 from acting on a core portion. Accordingly, deformation of the core portion of the electrode assembly 10 can be prevented, and an occurrence of a short circuit caused by damage to the separator can be prevented, thereby securing battery stability.

The core portion is provided at an innermost side of the electrode assembly, and means an empty space provided by winding a jelly-roll type electrode assembly using a core. The empty space may be provided in a cylindrical shape.

A surface facing the core portion means a surface directly in contact with the core portion.

A peripheral portion 41R of the core portion means a periphery of the core portion, which is an empty space provided by winding the jelly-roll type electrode assembly. A width of the first electrode in-tab 110 may be 85% or more, 90% or more, or 95% or more of a length of the peripheral portion 41R of the core portion, but is not limited thereto. When the width of the first electrode in-tab 110 satisfies the above range, the first electrode in-tab 110 is provided to surround the peripheral portion 41R of the core portion of the negative electrode, so that internal rigidity of the core portion can be increased, and thus the expansion stress inside the electrode assembly can be prevented from acting on the core portion. Therefore, it is advantageous in securing the battery stability by preventing the deformation of the core portion of the electrode assembly and preventing the occurrence of the short circuit caused by the damage to the separator. Here, a peripheral portion 51R of the electrode assembly means a peripheral portion of an end portion of the electrode assembly 1 in a winding axis direction.

In addition, the first electrode 100 may further include a first electrode outer tab 120 at an end located at an outer portion among both ends in the direction perpendicular to the winding axis of the electrode assembly 10. In this case, resistance of the electrode assembly becomes smaller than when the negative electrode 100 and the positive electrode 200 each have one tab, so that energy density can be increased. At this time, the first electrode outer tab 120 may be formed in the same configuration as the first electrode in-tab 110. That is, the first electrode outer tab 120 may be attached to the first electrode 100 and protrude in one direction parallel to the winding axis.

Meanwhile, referring to FIG. 4, the second electrode 200 may include a second electrode tab 210 attached to the second electrode 200 and protruding in another direction parallel to the winding axis.

Referring to FIGS. 5 and 6, the first electrode in-tab 110 is provided at the end located at the core portion among both ends of the first electrode 100 in the direction perpendicular to the winding axis of the electrode assembly 10, and the first electrode outer tab 120 is provided at the end located at the outer portion among both ends of the first electrode 100 in the direction perpendicular to the winding axis of the electrode assembly 10. Here, both ends of the first electrode 100 correspond to a first uncoated portion 100a on which an active material layer is not coated.

The first electrode in-tab 110 and the first electrode outer tab 120 may include at least one of copper and nickel having a thermal conductivity of about 90 W/(m·K) or more, wherein the thermal conductivity of the copper may be about 401 W/(m·K), and the thermal conductivity of the Ni may be about 91 W/(m·K).

As an example, the first electrode in-tab 110 and the first electrode outer tab 120 may be provided as a clad tab in which a copper layer including copper and a nickel layer including nickel are joined, and in this case, heat generated in the electrode assembly can be transferred from the copper layer having good thermal conductivity, so that a thermal conductivity similar to the thermal conductivity of copper can be obtained, which is advantageous for heat conduction.

The first electrode in-tab 110 and the first electrode outer tab 120 each include an inner portion 110b and 120b attached to the first electrode and a protrusion portion 110a and 120a protruding in the winding axis direction.

As illustrated in FIG. 6, the inner portions 110b and 120b of the first electrode in-tab 110 and the first electrode outer tab 120 respectively include a welding portion 111a and 121a welded and coupled to the first electrode 100, and the resin application portions 112 and 122 are provided in a region adjacent to the welding portions 111a and 121a.

More specifically, the resin application portions 112 and 122 are provided in plurality on each of the first electrode in-tab 110 and the first electrode outer tab 120, and the resin application portions 112 and 122 are provided simultaneously on an upper resin application portion 112a and 122a that is an upper portion of the welding portion and a lower resin application portion 112b and 122b that is a lower portion of the welding portion.

The resin application portions 112 and 122 may be provided such that an area formed on an upper portion of the welding portions 111a and 121a is larger than an area formed on a lower portion of the welding portions 111a and 121a. That is, an area of the upper resin application portions 112a and 122a may be provided to be larger than an area of the lower resin application portions 112b and 122b. This is because a region where the resin application portion is formed among the electrode tabs is an adjacent region at an upper end of a current collector, which allows the upper resin application portions 112a and 122a to improve deformation resistance of the tabs by increasing physical strength so that the first electrode in-tab 110 and the first electrode outer tab 120 at the upper end region of the current collector can prevent an internal short circuit caused by bending and deformation of the electrode tabs more than the inside.

The resin application portions 112 and 122 may be formed by applying at least one of a UV resin and a flexible resin. Here, the UV resin or the flexible resin as the resin application portions 112 and 122 provides strong adhesiveness to strengthen bonding force with the electrode tabs, which increases resistance to vibration or impact, thereby improving durability of the battery. In addition, it protects against physical damage or corrosion, and thus reliability and lifespan of the battery can be increased. That is, the UV resin and the flexible resin have excellent chemical resistance and thus can maintain stability in various environments, which enables the battery to continuously exhibit performance even when exposed to extreme temperature, humidity, or chemicals.

In addition, the UV resin can be rapidly cured through UV lighting to generate a cured resin having strong hardness within a short time, thereby increasing efficiency of productivity.

At this time, the resin application portions 112 and 122 may be provided in a region excluding a region where the first electrode in-tab 110 and the first electrode outer tab 120 are bent, and may be provided in a region where the first electrode in-tab 110 and the first electrode outer tab 120 do not protrude from the electrode assembly.

In addition, a resin application portion may be formed on the electrode tab 210 of the second electrode 200 in the same manner as the resin application portions 112 and 122 are formed on the first electrode in-tab 110 and the first electrode outer tab 120. That is, by respectively forming the resin application portion at the upper portion and the lower portion of the welding portion, the physical strength is increased to prevent the internal short circuit caused by the bending and the deformation of the electrode tab, thereby making it possible to improve deformation resistance of the tab.

Meanwhile, FIG. 9 is a view illustrating an example in which deformation occurs at the core portion and an outer side of the electrode assembly. As shown in FIG. 9, in the case of a cylindrical battery, it was confirmed that a phenomenon of bending or warping easily occurs when subjected to an external force as a distance from a portion other than a tab welding portion increases.

On the other hand, in an embodiment of the present invention, by forming the resin application portion at the welding portions of the first electrode in-tab 110 and the first electrode outer tab 120, the expansion stress inside the electrode assembly 1 can be prevented from acting on the core portion due to an increase in internal rigidity, and the deformation can be prevented even against external impacts such as dropping of the can or vibration caused by an external force. Accordingly, it becomes advantageous in securing the battery stability by preventing the deformation of the core portion of the electrode assembly 1 and preventing the occurrence of the short circuit caused by the external impact.

Referring back to FIGS. 1 and 2, the battery can 20 is a substantially cylindrical receptacle having an opening formed at an upper end thereof, and is made of a material having conductivity, such as a metal. A material of the battery can 20 may be, for example, aluminum. A side surface (outer peripheral surface) and a lower surface of the battery can 20 may be integrally formed. The lower surface (a surface parallel to an X-Y plane) of the battery can 20 has a substantially flat shape. The lower surface positioned on an opposite side to the opening will be referred to as a closed portion. The battery can 20 accommodates the electrode assembly 10 through the opening formed at an upper end thereof, and also accommodates an electrolyte together.

The battery can 20 is electrically connected to the electrode assembly 10. The battery can 20 may be electrically connected to one of the first electrode 100 and the second electrode 200. For example, the battery can may be electrically connected to the first electrode 100 of the electrode assembly 10. In this case, the battery can 20 may have the same polarity as the first electrode 100.

Referring to FIG. 2, the sealing body 30 may be made of, for example, a metal material to secure rigidity. The sealing body 30 may cover the opening formed at an upper end of the battery can 20. That is, the sealing body 30 forms an upper surface of the battery cell 1. In the battery cell 1 of the present invention, the sealing body 30 does not have polarity even when made of a conductive metal material. Having no polarity may mean that the sealing body 30 is electrically insulated from the battery can 20 and the terminal 40. Therefore, the sealing body 30 does not function as a positive terminal or a negative terminal. Accordingly, the sealing body 30 does not need to be electrically connected to the electrode assembly 10 and the battery can 20, and a material thereof is not necessarily required to be a conductive metal.

When the battery can 20 of the present invention includes a beading portion, the sealing body 30 may be seated on the beading portion formed at the battery can 20. In addition, when the battery can 20 of the present invention includes a crimping portion, the sealing body 30 may be fixed by the crimping portion. A sealing gasket may be interposed between the sealing body 30 and the crimping portion of the battery can 20 to secure airtightness of the battery can 20.

Referring to FIGS. 1 and 2, the terminal 40 may be electrically connected to the other one of the first electrode 100 and the second electrode 200. That is, the terminal 40 may have an opposite polarity to that of the battery can 20. For example, the terminal 40 may be electrically connected to the second electrode 200 of the electrode assembly 10. And, a surface of the terminal 40 may be exposed to the outside.

The terminal 40 may be made of a metal material having conductivity. The terminal 40 may penetrate, for example, an approximate center portion of the closed portion formed at a lower end of the battery can 20. A portion of the terminal 40 may be exposed to a lower portion of the battery can 20, and a remaining portion thereof may be positioned inside the battery can 20. The terminal 40 may be fixed on an inner surface of the closed portion of the battery can 20 by, for example, riveting. The terminal 40 may penetrate an insulator and be coupled to a current collector plate or the first electrode tabs 110 and 120 provided at the first electrode 100. In this case, the terminal 40 may have a first polarity. Therefore, the terminal 40 may function as a terminal of the first electrode 100 in the battery cell 1 of the present invention. When the terminal 40 has the first polarity as such, the terminal 40 is electrically insulated from the battery can 20 having a second polarity. Electrical insulation between the terminal 40 and the battery can 20 may be realized in various ways. For example, insulation may be realized by interposing an insulating gasket between the terminal 40 and the battery can 20.

The cylindrical battery cell 1 according to the above-described embodiment may be used to manufacture a battery pack.

FIG. 7 is a view schematically illustrating a configuration of a battery pack according to an embodiment of the present invention.

Referring to FIG. 7, a battery pack 3 according to an embodiment of the present invention includes an assembly in which battery cells 1 are electrically connected and a pack housing 2 accommodating the assembly. The battery cell 1 is the battery cell 1 according to the above-described embodiment. In the drawings, illustration of components such as a bus bar, a cooling unit, and an external terminal 40 for electrical connection of the battery cells 1 is omitted for convenience of illustration.

The battery pack 3 may be mounted in a vehicle. The vehicle may be, for example, an electric vehicle, a hybrid vehicle, or a plug-in hybrid vehicle. The vehicle includes a four-wheeled vehicle or a two-wheeled vehicle.

FIG. 8 is a view for explaining a vehicle comprising the battery pack of FIG. 7.

Referring to FIG. 8, a vehicle 5 according to an embodiment of the present invention includes the battery pack 3 according to an embodiment of the present invention. The vehicle 5 operates by receiving power from the battery pack 3 according to an embodiment of the present invention.

Although the present invention has been described above with reference to limited embodiments and drawings, the present invention is not limited thereto, and various modifications and variations may be made by those skilled in the art to which the present invention pertains within the technical spirit of the present invention and the equivalent scope of the claims described below.

### [INDUSTRIAL APPLICABILITY]

An embodiment of the present invention may be industrially used by providing an electrode assembly, a battery cell, a battery pack, and a vehicle comprising the same, capable of preventing an internal short circuit caused by bending and deformation of an electrode tab, and improving deformation resistance of the tab by increasing the physical strength of a welding portion of the electrode tab.

## Claims

1. A jelly-roll type electrode assembly having a structure in which a first electrode, a second electrode, and a separator interposed therebetween are wound in one direction, wherein
the first electrode includes a first electrode in-tab and a first electrode outer tab attached to the first electrode and protruding in one direction parallel to a winding axis, and
the first electrode in-tab and the first electrode outer tab each include a resin application portion in which a resin is applied to at least a partial region.

2. The electrode assembly of claim 1, wherein
the first electrode in-tab is provided at an end located at a core portion among both ends of the first electrode in a direction perpendicular to the winding axis of the electrode assembly, and
the first electrode outer tab is provided at an end located at an outer portion among both ends of the first electrode in the direction perpendicular to the winding axis of the electrode assembly.

3. The electrode assembly of claim 1, wherein
the first electrode in-tab and the first electrode outer tab each include an inner portion attached to the first electrode and a protrusion portion protruding in the winding axis direction.

4. The electrode assembly of claim 3, wherein
the first electrode in-tab and the first electrode outer tab each include a welding portion welded and coupled to the first electrode at the inner portion, and
the resin application portion is provided in a region adjacent to the welding portion.

5. The electrode assembly of claim 1, wherein
the resin application portion is provided in plurality on each of the first electrode in-tab and the first electrode outer tab, and
the resin application portion is simultaneously provided on an upper resin application portion that is an upper portion of a welding portion and a lower resin application portion that is a lower portion of the welding portion.

6. The electrode assembly of claim 5, wherein
the resin application portion is provided such that an area of the upper resin application portion is larger than an area of the lower resin application portion.

7. The electrode assembly of claim 1, wherein
the resin application portion
has at least one of a UV resin and a flexible resin applied thereto.

8. The electrode assembly of claim 1, wherein
the resin application portion is provided in a region excluding a region where the first electrode in-tab and the first electrode outer tab are bent.

9. The electrode assembly of claim 1, wherein
the resin application portion is provided at an inner portion that is a region where the first electrode in-tab and the first electrode outer tab do not protrude from the electrode assembly.

10. The electrode assembly of claim 1, wherein
the first electrode is a negative electrode.

11. A cylindrical battery cell comprising: the electrode assembly according to any one of claims 1 to 10;
a battery can accommodating the electrode assembly and electrically connected to the first electrode;
a sealing body sealing an open end of the battery can; and
a terminal electrically connected to the second electrode and having a surface exposed to an outside.

12. A battery pack comprising the cylindrical battery cell according to claim 11.

13. A vehicle comprising the battery pack according to claim 12.
